# EUROPEAN PATENT APPLICATION

(11) **EP 1 859 682 A1**
(43) Date of publication of application: **28.11.2007**
(21) Application number: 06714572.2
(22) Date of filing: 24.02.2006
(51) Int. Cl.: A23C 9/152, A23L 1/30, A23L 2/38, A23L 2/52

(54) **VEGETABLE STEROL-CONTAINING MILK DRINK AND METHOD OF PRODUCING THE SAME**

(30) Priority: 24.02.2005 JP 2005049733
(71) Applicant: SAN-EI GEN F.F.I., INC., Toyonaka-shi, Osaka 561-8588 (JP)
(72) Inventor: MASUTAKE, Kenji, yonaka-shi, Osaka, 5618588 (JP)
(74) Representative: Müller-Boré & Partner Patentanwälte
(86) International application number: PCT/JP2006/303433
(87) International publication number: WO 2006/090840

(57) **Abstract**

Concerning, in particular, milk drinks and LL type milk drinks which are produced via the UHT pasteurization and distributed under refrigeration, it is intended to provide a vegetable sterol-containing milk drink containing vegetable sterols, which are in an emulsified state and remain stable without sedimentation during storage, and being excellent in quality preservation and stability. A milk drink is prepared by using an emulsifier with an HLB of from 5 to 7 together with vegetable sterols and milk components. Furthermore, it is possible to add at least one member selected from the group consisting of xanthan gum, native gellan gum, carrageenan, sodium caseinate and microcrystalline cellulose.

## Description

### TECHNICAL FIELD

The present invention relates to a milk beverage containing plant sterols. More specifically, the present invention relates to a milk beverage containing plant sterols which is manufactured using ultra high temperature short time pasteurization (hereinafter referred to as "UHT pasteurization"), which contains plant sterols with long term stability during storage, and which has excellent quality maintaining properties and stability. Furthermore, the present invention relates to a manufacturing method of such milk beverage containing plant sterols, and to a method of emulsifying and stabilizing a milk beverage containing plant sterols.

### BACKGROUND ART

In recent years, it has been said that there is a trend towards excessive intake of cholesterol even in Japan because of the westernization and diversification of dietary habits and changes in lifestyle. Increased cholesterol in the blood due to excessive intake of cholesterol included in food is a factor for the onset of cardiovascular diseases such as hyperlipidemia, arteriosclerosis, arrhythmia, and myocardial infarction, and currently these diseases tend to be increasing. Therefore, attention has been given to plant sterols as substances which can inhibit the absorption of cholesterol into the body and reduce cholesterol levels in blood serum. However, plant sterols have the disadvantage of being difficult to dissolve in either water or oil, and therefore use in foods is difficult, and methods of emulsifying in water or oil in order to use in foods are under investigation.

For example, known methods of dispersing plant sterols in water-based dispersions or suspensions include a method of mixing a high melting point lipid such as a plant sterol which melts at 150°C with a non-sterol emulsifying agent such as a monoglyceride at a ratio of non-sterol emulsifying agent to high melting point lipid of less than 1/2 (weight ratio) (Patent document 1); and a method of mixing plant sterol and an emulsifying agent, heating to melt at a temperature between 60°C and 200°C, adding this meltage to a water-based beverage or to a water-based beverage comprising an emulsifying agent, and mixing the water based beverage obtained at high-speed to disperse the plant sterol in the water based beverage (Patent document 2) and the like.

Furthermore, Patent document 3 discloses that a beverage with excellent storage stability can be prepared by adding to the beverage a water soluble composition containing plant sterol, consisting of (A) plant sterol, (B) one or more types of lipophilic emulsifying agents selected from a group consisting of glycerin fatty acid esters, organic acid monoglycerides, polyglycerin fatty acid esters, propylene glycol fatty acid esters, polyglycerin condensed ricinoleate esters, sorbitan fatty acid esters, sucrose fatty acid esters, and lecithin, (C) edible oils, (D) at least one type of hydrophilic polyglycerin fatty acid ester, and(E) water to make the balance, such that the HLB value of the emulsifying agent in the entire system is 12 or higher.

However, for beverages which are manufactured using UHT pasteurization and then distributed either cooled or at room temperature, and beverages which are distributed as long life (LL) products, the emulsification will not be stable if plant sterol is added, and there will be problems with precipitation.
Patent document 1: Japanese Patent Application Laid-open No. H11-146757
Patent document 2: Japanese Patent Application Laid-open No. 2002-112747
Patent document 3: Japanese Patent Application Laid-open No. 2002-291442

### DISCLOSURE OF THE INVENTION

### Problem to be solved by the Invention

The present invention was developed in light of the foregoing, and an object of the present invention is to provide a milk beverage containing stably emulsified plant sterol, and to a manufacturing method thereof. In further detail, an object of the present invention is to provide a milk beverage containing plant sterol that is manufactured by a UHT pasteurization process, that contains stably emulsified plant sterol, and that has excellent stability and quality retention by significantly restricting the generation of coagulates and precipitates even during long term storage, and also to provide a manufacturing method thereof.

Another object of the present invention is to provide a method of emulsifying and stabilizing a milk beverage containing plant sterol, and particularly to a method for emulsifying and stabilizing a milk beverage containing plant sterol manufactured using a UHT pasteurization process, such that problems such as coagulation or precipitation will not occur even during long-term storage.

### Means for Solving the Problems

As a result of diligent research into the aforementioned problems with the conventional technology, the present inventors have discovered that the aforementioned objects can be achieved, that plant sterol in a milk beverage can be stabilized and emulsified for a long period of time, that the effects are particularly strong for milk beverages manufactured using a UHT pasteurization process, and that a milk beverage containing plant sterol with excellent quality retention and stability and which controls precipitation during transportation and storage can be obtained by adding an emulsifying agent with an HLB between 5 and 7 to the ingredients of the milk beverage. The present invention was completed based on these findings, and relates to a milk beverage containing plant sterol with the following aspects.

### (1) Milk Beverage

Item 1. A milk beverage containing plant sterol, milk constituents, and an emulsifying agent with an HLB between 5 and 7.
Item 2. The milk beverage according to Item 1, wherein the emulsifying agent with an HLB between 5 and 7 is at least one substance selected from a group consisting of sorbitan fatty acid esters, organic acid monoglycerides, sucrose fatty acid esters and polyglycerin fatty acid esters.
Item 3. The milk beverage according to Item 1, wherein the emulsifying agent with an HLB between 5 and 7 is a sorbitan fatty acid ester.
Item 4. The milk beverage according to any one of Items 1 through 3, wherein the plant sterol is one or more substances selected from a group consisting of β-sitosterol, campesterol, stigmasterol, brassicasterol, sitostanol, and campestanol , and esters thereof. Item 5. The milk beverage according to any one of Items 1 through 4, containing between 0.8 and 5 wt% of milk constituents, calculated on a nonfat solid content basis.
Item 6. The milk beverage according to any one of Items 1 through 5, manufactured using an ultra high temperature short time pasteurization process.

### (2) Manufacturing Method of Milk Beverage

Item 7. A manufacturing method for a milk beverage, comprising a step of homogenizing and thermal pasteurizing milk beverage ingredients containing plant sterol and milk constituents in the presence of an emulsifying agent with an HLB between 5 and 7.
Item 8. The manufacturing method according to Item 7, wherein the emulsifying agent with an HLB between 5 and 7 is at least one substance selected from a group consisting of sorbitan fatty acid esters, organic acid monoglycerides, sucrose fatty acid esters and polyglycerin fatty acid esters.
Item 9. The manufacturing method according to Item 7, wherein the emulsifying agent with an HLB between 5 and 7 is a sorbitan fatty acid ester.
Item 10. The manufacturing method according to any one of Items 7 through 9, wherein the plant sterol is one or more substances selected from a group consisting of β-sitosterol, campesterol, stigmasterol, brassicasterol, sitostanol, and campestanol , and esters thereof.
Item 11. The manufacturing method according to any one of Items 7 through 10 wherein the content of milk constituents in the milk beverage ingredients is between 0.8 and 5 wt% calculated on a nonfat solid content basis.
Item 12. The manufacturing method according to any one of Items 7 through 11, wherein the thermal pasteurization is ultra high temperature short time pasteurization.

### (3) Method for Emulsifying and Stabilizing a Milk Beverage Containing Plant Sterol

Item 13. A method for emulsifying and stabilizing a milk beverage containing plant sterol, comprising a step of homogenizing and thermal pasteurizing milk beverage ingredients containing plant sterol and milk constituents in the presence of an emulsifying agent with an HLB between 5 and 7.
Item 14. The method according to Item 13, wherein the emulsifying agent with an HLB between 5 and 7 is at least one substance selected from a group consisting of sorbitan fatty acid esters, organic acid monoglycerides, sucrose fatty acid esters and polyglycerin fatty acid esters.
Item 15. The method according to Item 13, wherein the emulsifying agent with an HLB between 5 and 7 is a sorbitan fatty acid ester. Item 16. The methods according to any one of Items 13 through 16, wherein the plant sterol is one or more substances selected from a group consisting of β-sitosterol, campesterol, stigmasterol, brassicasterol, sitostanol, and campestanol , and esters thereof. Item 17. The method according to any one of Items 13 through 16 wherein the content of milk constituents in the milk beverage ingredients is between 0.8 and 5 wt% calculated on a nonfat solid content basis.

### (4) Use of Emulsifying Agent with HLB between 5 and 7 Item 18. A use of an emulsifying agent with an HLB between 5 and 7 for manufacturing an emulsified and stabilized milk beverage containing plant sterol and milk constituents.

Item 19. A use of an emulsifying agent with an HLB between 5 and 7 for emulsifying and stabilizing a milk beverage containing plant sterol and milk constituents.
Item 20. The use according to Item 19, wherein the milk beverage is manufactured using a high temperature short time pasteurization process.

### Effect of the Invention

Using the present invention, plant sterol can be stably emulsified in a milk beverage, coagulation and precipitation of the fat components can significantly be restricted during long-term storage, and a milk beverage made by emulsifying and stabilizing plant sterol for long period of time can be provided. In addition, the present invention can suitably be applied to milk beverages manufactured using UHT pasteurization.

### BEST MODE FOR CARRYING OUT THE INVENTION

The milk beverage of the present invention relates to a milk beverage made by stably emulsifying plant sterol and milk constituents for a long period of time by containing plant sterol, milk constituents and an emulsifying agent with an HLB between 5 and 7. With the present invention, the milk beverage can be stabilized and emulsified for a long period of time if an emulsifying agent with an HLB between 5 and 7 is present.

The milk beverage of the present invention refers to a neutral or mildly acidic milk beverage containing milk constituents. Preferably the pH of the beverage is in a range between 5.5 and 8. Herein, milk constituents refers to raw milk, cow's milk, or specialty milks as well as components that are manufactured using these as ingredients. Specific examples of milk constituents include raw milk, cow's milk, specialty milk, raw cream, powdered whole milk, powdered skim milk, evaporated whole milk, and evaporated skim milk, and the like. The amount of milk constituents in the milk beverage is not particularly restricted, but normally is 0.8 wt% or higher, preferably in a range between 0.8 and 5 wt%, more preferably in a range between 2 and 5 wt%, because precipitation can easily occur when plant sterol is added to conventional milk beverage having said ranges of milk constituents.

Although not restricted, examples of these milk beverages include milk coffee beverages, cafe-au-lait, milk tea, milk cocoa, milkshakes, soups, milk and fruit beverages, milk and egg beverages, milk beverages with green tea, and milk beverages containing soy milk and the like.

The milk beverages which are applicable to the present invention are preferably those manufactured using UHT pasteurization. Thermal pasteurization using UHT (thermal pasteurization temperature and time) is not restricted, but is normally performed at a temperature between 120 and 145°C for between approximately 2 and 120 seconds. Preferably a method of thermal pasteurizing the blended milk beverage ingredients at a temperature between 130 and 142°C for between approximately 2 and 5 seconds using a plate heat exchanger or a tubular heat exchanger can be suggested.

The plant sterol used with the present invention is extracted from vegetable oils such as soy, rapeseed oil, or cottonseed, and is purified if necessary. Specific examples include as a major component one or more substances selected from β-sitosterol, campesterol, stigmasterol, brassicasterol, sitostanol, and campestanol. Preferably one or more of β-sitosterol, campesterol, stigmasterol, or esters thereof are included as a major component.

The form of the plant sterol added to the milk beverage is not restricted in particular. For example, the form may be a solid such as a powder, or dissolved in a solvent such as water or alcohol, or as a dispersed liquid. Preferably the form has been processed to be readily soluble in water. Methods for processing the plant sterol to be readily soluble in water can be a commonly known method without restriction. Although not a restriction, examples of these methods include a method of blending and kneading plant sterol with lipophilic emulsifying agent (such as glycerin fatty acid ester and polysorbate) and dextrin, and then sieving, fluidized bed granulating, spray drying, and powdering (for example, refer to Japanese Patent Application Laid-open No. 2005-269941); a method of heating and melting the plant sterol at a temperature above the melting point, and then blending, emulsifying, or solublizing with a liquid containing an emulsifying agent (such as gum arabic, sucrose fatty acid esters, and glycerin fatty acid esters), water and a polyhydric alcohol; a method of blending plant sterol with the aforementioned emulsifying agent, and then heating to melt above the melting point, and then blending, emulsifying, or solublizing in water or a polyhydric alcohol; or a method of blending plant sterol, the aforementioned emulsifying agent, and water or a polyhydric alcohol, heating to melt above the melting point, and then emulsifying or solublizing (refer to US Patent No. 3,535,147).

Plant sterol which has been processed to be readily soluble can be commercially obtained, and an example is the San Sterol (trademark) series (San Sterol No. 1) manufactured by San-Ei Gen F. F. I., Inc. Note, the post mentioned emulsifying agent with an HLB between 5 and 7 can be added when the plant sterol is powdered.

The formulation ratio of the plant sterol in the milk beverage is normally in a range between 0.01 and 5 wt%, preferably between 0.05 and 3 wt%, and even more preferably in a range between 0.2 and 2 wt%.

The emulsifying agent with an HLB between 5 and 7 that is used in the present invention is not particularly restricted so long as the HLB is in a range between 5 and 7, and specific examples include sorbitan fatty acid esters, sucrose fatty acid esters, organic acid monoglycerides (succinic acid monoglyceride, citric acid monoglyceride, diacetyltartaric acid monoglyceride, acetic acid monoglyceride, lactic acid monoglyceride), glycerin fatty acid esters (monoglycerin fatty acid ester, diglycerin fatty acid ester), polyglycerin fatty acid ester, propylene glycol fatty acid ester, stearoyllactate, yucca extract, saponin, lecithin, and polysorbate and the like. Of these, sorbitan fatty acid ester, sucrose fatty acid ester, organic acid monoglyceride (succinic acid monoglyceride, citric acid monoglyceride, diacetyltartrate monoglyceride, acetic acid monoglyceride, lactic acid monoglyceride), or polyglycerin fatty acid esters are preferably used. These substances can be used individually, or as combinations of two or more types. The emulsifying agent is most preferably a sorbitan fatty acid ester. These emulsifying agents with an HLB in a range between 5 and 7 can be commercially procured, and an example of a sorbitan fatty acid ester with an HLB between 5 and 7 is the Homogen (trademark) series manufactured by San-Ei Gen F. F. I., Inc.

The blending ratio of these emulsifying agents in the milk beverage will vary depending on the concentration of the plant sterol used, the type of milk beverage, and the shipping condition of the product or the like, but normally is in a range between 0.005 and 1 wt%, preferably in a range between 0.05 and 0.7 wt%, and more preferably in a range between 0.1 and 0.5 wt%. Note, adding in excess of 1 wt% does not particularly hinder the effect of the present invention which is emulsification and stability, but the unique taste of emulsifying agents is strong, and can have an effect on the flavor of the final milk beverage.

Furthermore, in addition to the aforementioned emulsifying agent with an HLB between 5 and 7, the milk beverage of the present invention may also contain one or more substances selected from xanthan gum, native gellan gum, carrageenan, casein sodium, and microcrystalline cellulose. By adding these components, the effect of preventing coagulation and precipitation of the fat components can be further increased if the milk beverage containing plant sterol is stored for long period of time. The formulation ratio of these components in the milk beverage is not restricted, but is normally in a range between 0.005 and 1 wt%, preferably between 0.01 and 0.5 wt%, and more preferable in a range between 0.02 and 0.2 wt%, based on the total quantity.

Note, the aforementioned microcrystalline cellulose can be the same type that is widely used as a dispersing agent or stabilizing agent in foods and beverages. The microcrystalline cellulose can be microcrystalline cellulose as is, but a microcrystalline cellulose composite material containing a dispersing agent or a disintegrating agent can be suitably used. Examples of the dispersing agent or disintegrating agent include carboxymethylcellulose sodium, galactomannan (guar gum, enzymatic degraded guar gum, locust bean gum, and tara gum and the like), polydextrose, non-digestible dextrin, gum arabic, arabinogalactan, alginic acid, and salts thereof, curdlan, gum ghatti, carrageenan, karaya gum, agar, xanthan gum, psylium seed gum, tamarind seed gum, gellan gum, gelatin, tragacanth gum, furcellaran, pullulan, and pectin and the like. Of these, carboxymethylcellulose sodium, carrageenan, karaya gum, xanthan gum, gellan gum, non-digestible dextrin, and pectin are preferable. The method for manufacturing these microcrystalline cellulose composite materials can be by a publicly known method shown in Japanese Patent S40-14174, Japanese Patent S62-43661, or Japanese Patent Application Laid-open No. H6-335365 or the like. Specifically, a method of uniformly blending finely divided cellulose obtained by crushing pulp with the aforementioned dispersing agent or disintegrating agent to make a slurry which is then dried can be suggested. Furthermore, the size of the microcrystalline cellulose crystal particles is not restricted, but generally the average particle size is 20 µm or less, preferably 10 µm or less, and more preferably 5 µm or less.

The microcrystalline cellulose can be commercially procured, and examples include the Abicell (trademark) series or the Ceolas (trademark) series manufactured by Asahi Kasei Corporation, as well as Homogen (trademark) No. 1610 and Homogen (trademark) No. 1855 manufactured by San-Ei Gen F. F. I., Inc.

In addition to the aforementioned plant sterol, milk constituents, emulsifying agent with an HLB between 5 and 7, and at least one substance selected from xanthan gum, native gellan gum, carrageenan, casein sodium, and microcrystalline cellulose if necessary. The milk beverage containing plant sterol of the present invention can also arbitrarily contain sugars, sweeteners, high intensity sweeteners, coffee, tea, cocoa, green tea, chocolate, egg products such as egg yolk or egg whites, acidifiers, seasonings, colorants, flavours, fruit juices, purees, preservatives, extracts, gum, pH adjusters, alcoholic beverages, vitamins, and other minerals and the like.

Examples of sugars include sucrose, fructose, glucose, starch syrup, reduced starch syrup, honey, isomerized glucose, invert sugar, oligosaccharides (for example, isomalt oligosaccharides, reduced xylooligosaccharide, reduced gentiooligosaccharide, xylooligosaccharide, gentiooligosaccharide, negrooligosaccharide, teandeoligosaccharide, soy oligosaccharide, and the like), trehalose, sugar alcohols (such as maltitol, erithritol, sorbitol, paratinit, xylitol, lactitol, and the like), and coupling sugar and the like.

Examples of high intensity sweeteners include asparteme, acesul fame potassium, sucralose, alitame, neotame, Licorice extract (glycyrrhizin), saccharine, saccharine sodium, Stevia extract, and Stevia powder, and the like.

Note, emulsifying agents other than the aforementioned emulsifying agent with an HLB between 5 and 7 can also be added to the milk beverage of the present invention to the extent that the effect of the present invention is not lost. Specific examples of these emulsifying agents include sucrose fatty acid esters, glycerin fatty acid esters (monoglycerin fatty acid esters, diglycerin fatty acid esters), polyglycerin fatty acid esters, polyglycerin condensed ricinoleic acid esters, sorbitan fatty acid esters, stearoyl lactic acid salts (sodium salt, potassium salts), yucca extract, saponin, lecithin, and polysorbate and the like which have an HLB other than between 5 and 7. Sucrose fatty acid esters, glycerin fatty acid esters (monoglycerin fatty acid ester, diglycerin fatty acid ester) are preferable. By adding these emulsifying agents, the emulsifying and stabilizing effect of the emulsifying agent with an HLB between 5 and 7 can be supplemented, and the effect of restricting coagulation and precipitation of fat components can be further enhanced.

Furthermore, a stabilizing agent can also be added to the milk beverage of the present invention to the extent that the effect of the present invention is not lost. Specific examples of these stabilizing agents include deacylated gellan gum, agar, gelatin, pectin, tapioca starch, cornstarch and the like starch, milk serumprotein, locust bean gum, guargum, gumarabic, glucomannan, tara gum, pullulan, tamarind gum, tragacanth gum, karaya gum, alginic acid,sodium alginate,Macrophomopsisgum, carboxymethylcellulose, finely divided cellulose, fermented cellulose, soybean saccharide, and dextrin, and the like.

### (2) Manufacturing Method of Milk Beverage Containing Plant Sterols

The aforementioned milk beverage of the present invention can be prepared by a process of homogenizing and thermal pasteurizing the milk beverage ingredients containing plant sterol and milk constituents in the presence of an emulsifying agent with an HLB between 5 and 7.

Homogenizing can be performed using a standard method. For example, a method of processing with a commercial homogenizer or homomixer can be suggested. Preferably two-stage homogenization is performed. If two-stage homogenization is performed, the suggested homogenization conditions include: first stage 9.8 × 10⁶ Pa (100 kgf/cm²), second stage 4.7 × 10⁶ Pa (50 kgf/cm²) for a total of 14.7 × 10⁶ Pa (150 kgf/cm²) at a temperature between 60 and 80°C. Furthermore, homogenization can be repeated multiple times.

Thermal pasteurizing is generally performed after blending all of the milk beverage ingredients, homogenizing, and then filling and sealing the container. The thermal pasteurization method is not particularly restricted, and thermal pasteurization methods which are suitable for beverages can be widely used. A UHT pasteurization method is preferable. The UHT pasteurization can be performed using a heat exchanger such as a plate type heat exchanger or a tubular type heat exchanger. The thermal pasteurization conditions are not particularly restricted, but for example, for the case of retort pasteurization, the conditions can be between 110 and 140°C for between 10 and 40 minutes, and specifically conditions of 121°C for approximately 30 minutes can be suggested. Furthermore, if thermal pasteurization (UHT pasteurization) is performed using a heat exchanger, the thermal pasteurization conditions can be 130°C for between approximately 2 and 5 seconds for cool shipped products, or 140°C for between approximately 15 and 60 seconds for room temperature shipped products such as milk beverages in cans and PET bottles.

With the milk beverage of the present invention, the fat component will not coagulate or precipitate even though this thermal pasteurization is performed because of the presence of the aforementioned emulsifying agent with an HLB between 5 and 7, and furthermore, with a milk beverage prepared using this process, the fat component will not coagulate or precipitate for a long period of time and the plant sterol can be stably emulsified.

Note, the aforementioned homogenization and thermal pasteurization processes can be performed in the presence of one or more substances other than emulsifying agents with an HLB between 5 and 7, selected from xanthan gum, native gellan gum, carrageenan, casein sodium, and microcrystalline cellulose. By performing in the presence of these components, the effect of preventing the occurrence of coagulation and precipitation of the fat components, which is had by the emulsifying agent with an HLB between 5 and 7, can be further enhanced. Furthermore, the aforementioned homogenization and thermal pasteurization processes can be performed in the presence of a glycerin fatty acid ester or a sucrose fatty acid ester with an HLB other than between 5 and 7 in addition to the presence of one or more substances selected from xanthan gum, native gellan gum, carrageenan, casein sodium, and microcrystalline cellulose, and the presence of the emulsifying agent with an HLB between 5 and 7.

The amount of the each of the aforementioned components such as the emulsifying agent with an HLB between 5 and 7 is as previously described.

Thus,the prepared milkbeverage containing plantsterol according to the present invention can be provided to the market as a product after filling in a sealed or closed container. The container filled with the milk beverage is not particularly restricted so long as the container can enclose or seal the milk beverage, and specific examples include various storage containers such as can, bottles, paper packs, PET bottles, and laminate packs.

### (3) Method for Emulsifying and Stabilizing a Milk Beverage Containing Plant Sterol

The milk beverage containing plant sterol can be emulsified and stabilized by a process of homogenizing and thermal pasteurizing the milk beverage raw material containing plant sterol and milk constituents in the presence of an emulsifying agent with an HLB between 5 and 7.

The method for emulsifying and stabilizing the milk beverage can be performed by performing the aforementioned homogenization and thermal pasteurization processes in the presence of the aforementioned emulsifying agent with an HLB between 5 and 7, and one or more substances selected from xanthan gum, native gellan gum, carrageenan, casein sodium, and microcrystalline cellulose. By performing thermal pasteurization in the presence of these components, the effect of preventing the occurrence of coagulation and precipitation of the fat components, which is had by the emulsifying agent with an HLB between 5 and 7, can be further enhanced, and the milk beverage can be even better emulsified and stabilized. Furthermore, the method for emulsifying and stabilizing the milk beverage of the present invention can be performed by performing the aforementioned homogenization and thermal pasteurization processes in the presence of an emulsifying agent with an HLB between 5 and 7, or in the presence of an emulsifying agent with an HLB between 5 and 7 and one or more of the aforementioned substances selected from xanthan gum, native gellan gum, carrageenan, casein sodium, and microcrystalline cellulose, as well as in the presence of another emulsifying agent such as a sucrose fatty acid ester or a glycerin fatty acid ester or the like with an HLB other than between 5 through 7. By using these emulsifying agents together, the effect of preventing the occurrence of coagulation and precipitation of the fat components, which is had by the emulsifying agent with an HLB between 5 and 7, can be further enhanced.

The amount of the emulsifying agent with an HLB between 5 and 7, and the amounts of the xanthan gum, native gellan gum, carrageenan, casein sodium, and microcrystalline cellulose as well as the amounts of other emulsifying agents are as described above, and the homogenization process and the thermal pasteurization process can also be as described above.

### Embodiments

The present inventionwill be described in further detail by using experimental examples and embodiments. However, these examples do not restrict the present invention. Note, the terms "parts" and "%" used in the embodiments refer to "weight parts" and "weight%".

### ExperimentalExamplel: Preparation of the Milk Beverage Containing Plant Sterol

A milk beverage containing plant sterol was prepared in accordance with the formulation shown in Table 1. Specifically, at the formulation shown in Table 1, a mixture of skim milk powder, plant sterol, emulsifying agent, and sodium bicarbonate was added to a blend of cow's milk and water, and after mixing to dissolve at 80°C for 10 minutes, the total amount was adjusted with water and then homogenized (first stage 14.7 × 10⁶ Pa (150 kg/cm²), second stage 4.9 × 10⁶ Pa (50 kgf/cm²)) at 80°C. The homogeneous liquid was filled into a can, UHT pasteurization was performed at 130°C for 15 seconds, and then water cooling was performed to 40°C to prepare a milk beverage containing plant sterol.

**Table 1**

| <Formulation> | |
|---|---|
| (weight parts) | |
| Cow's milk | 35.0 |
| Skimmed milk powder | 6.0 |
| Plant sterol* | 1.4 |
| Sodium bicarbonate | 0.05 |
| Emulsifying agent | Refer to Table 2 |
| Water after adding water | 100.0 |

| | |
|---|---|
| *San sterol No. 1 (product of San-Ei Gen F. F. I., Inc.): (primarily β-sitosterol, and also containing campesterol, stigmasterol, brassicasterol, sitostanol, and campestanol) | |

The milk beverage containing plant sterol that was obtained was stored for one day in a refrigerator at 8°C, and then filtered using a 100 mesh sieve, and then the presence of precipitates remaining on the sieve and the amount of precipitate was evaluated by the following criteria.

### <Evaluation Criteria of Precipitates Remaining on 100 Mesh Sieve>

- : No insolubles.
±: Some insolubles but extremely minimal.
+: Slight amount of insolubles.
++: Insolubles present.
+++: Insolubles plentiful.
++++: Insolubles extremely plentiful.

The results are shown in Table 2.

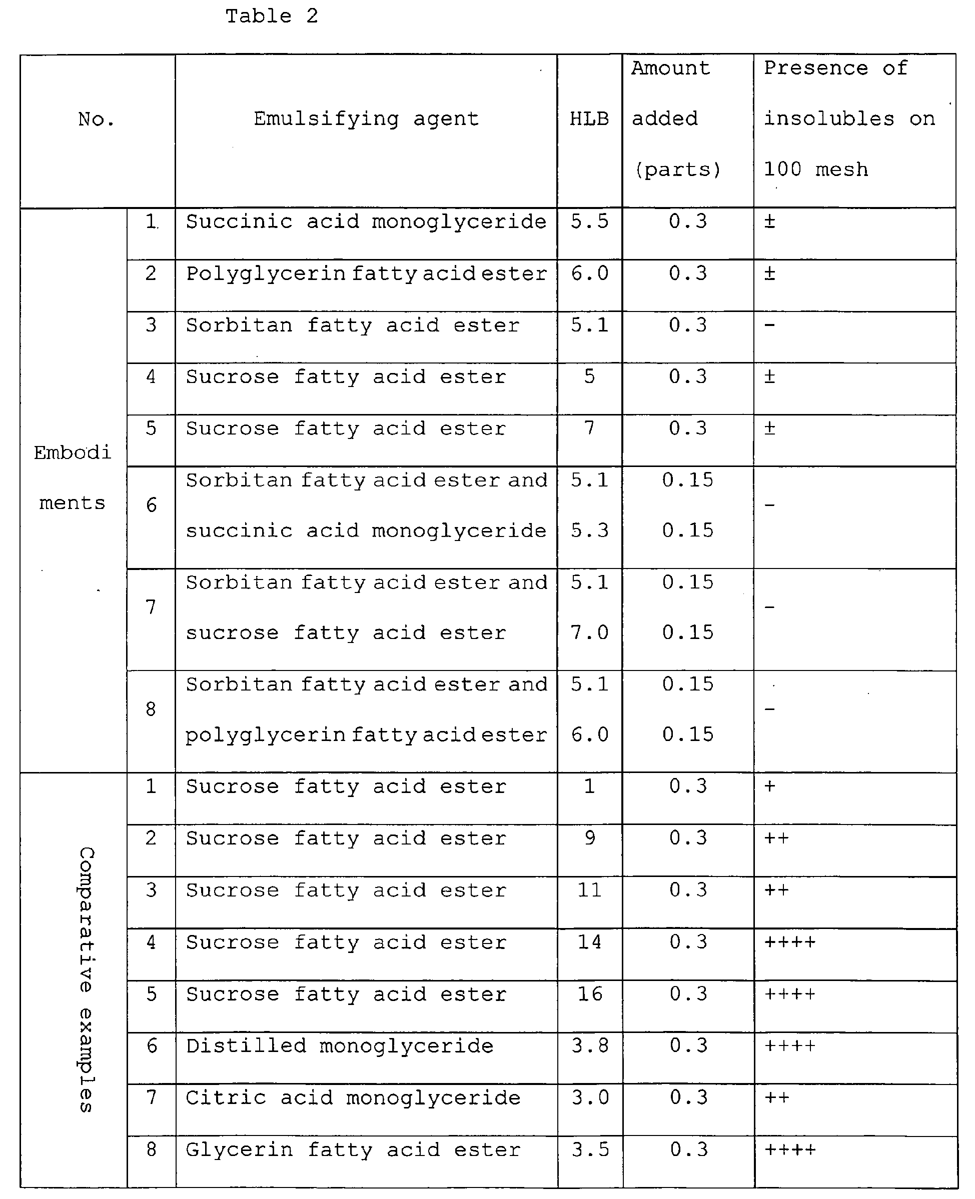

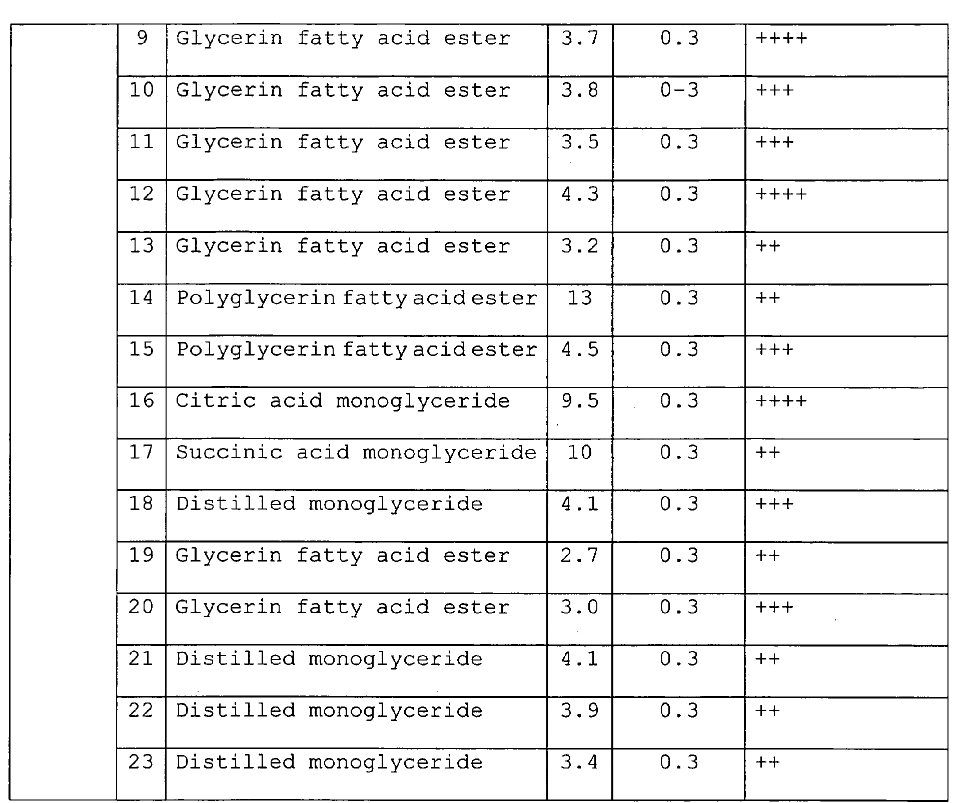

From Table 2, it can be seen that all of the milk beverages of embodiments 1 through 8 which used an emulsifying agent with an HLB between 5 and 7 either had no insolubles or had extremely minimal insolubles, so the plant sterol in the milk beverage was favorably stabilized and emulsified. Of these, the embodiments which used sorbitan fatty acid ester with an HLB between 5 and 7 were favorable. In contrast, insolubles were observed in the milk beverages which used an emulsifying agent where the HLB was not between 5 and 7 (comparative examples 1 through 23).

### INDUSTRIAL APPLICABILITY

The present invention can provide a milk beverage with plant sterol that has excellent quality retention and stability, and contains stably emulsified plant sterol which will not precipitate during storage, particularly for refrigeration transported milk beverages manufactured using UHT sterilization and LL type milk beverages.

## Claims

1. A milk beverage containing plant sterol, milk constituents, and an emulsifying agent with an HLB between 5 and 7.

2. The milk beverage according to Claim 1, wherein the emulsifying agent with an HLB between 5 and 7 is at least one substance selected from a group consisting of sorbitan fatty acid esters, organic acid monoglycerides, sucrose fatty acid esters and polyglycerin fatty acid esters.

3. The milk beverage according to Claim 1, wherein the emulsifying agent with an HLB between 5 and 7 is a sorbitan fatty acid ester.

4. The milk beverage according to Claim 1, wherein the plant sterol is one or more substances selected from a group consisting of β-sitosterol, campesterol, stigmasterol, brassicasterol, sitostanol, and campestanol, and esters thereof.

5. The milk beverage according to Claim 1, containing between 0.8 and 5 wt% of milk constituents, calculated on a nonfat solid content basis.

6. The milk beverage according to Claim 1, manufactured using an ultra high temperature short time pasteurization process.

7. A manufacturing method for a milk beverage, comprising a step of homogenizing and thermal pasteurizing milk beverage ingredients containing plant sterol and milk constituents in the presence of an emulsifying agent with an HLB between 5 and 7.

8. The manufacturing method according to Claim 7, wherein the emulsifying agent with an HLB between 5 and 7 is at least one substance selected from a group consisting of sorbitan fatty acid esters, organic acid monoglycerides, sucrose fatty acid esters and polyglycerin fatty acid esters.

9. The manufacturing method according to Claim 7, wherein the emulsifying agent with an HLB between 5 and 7 is a sorbitan fatty acid ester.

10. The manufacturing method according to Claim 7, wherein the plant sterol is one or more substances selected from a group consisting of β-sitosterol, campesterol, stigmasterol, brassicasterol, sitostanol, and campestanol, and esters thereof.

11. The manufacturing method according to Claim 7, wherein the content of milk constituents in the milk beverage ingredients is between 0.8 and 5 wt% calculated on a nonfat solid content basis.

12. The manufacturing method according to Claim 7, wherein the thermal pasteurization is ultra high temperature short time pasteurization.

13. A method for emulsifying and stabilizing a milk beverage containing plant sterol, comprising a step of homogenizing and thermal pasteurizing milk beverage ingredients containing plant sterol and milk constituents in the presence of an emulsifying agent with an HLB between 5 and 7.

14. The method according to Claim 13, wherein the emulsifying agent with an HLB between 5 and 7 is at least one substance selected from a group consisting of sorbitan fatty acid esters, organic acid monoglycerides, sucrose fatty acid esters and polyglycerin fatty acid esters.

15. The method according to Claim 13, wherein the emulsifying agent with an HLB between 5 and 7 is a sorbitan fatty acid ester.

16. The method according to Claim 13, wherein the plant sterol is one or more substances selected from a group consisting of β-sitosterol, campesterol, stigmasterol, brassicasterol, sitostanol, and campestanol , and esters thereof.

17. The method according to Claim 13, wherein the content of milk constituents in the milk beverage ingredients is between 0.8 and 5 wt% calculated on a nonfat solid content basis.

18. A use of an emulsifying agent with an HLB between 5 and 7 for manufacturing an emulsified and stabilized milk beverage containing plant sterol and milk constituents.

19. A use of an emulsifying agent with an HLB between 5 and 7 for emulsifying and stabilizing a milk beverage containing plant sterol and milk constituents.

20. The use according to Claim 19, wherein the milk beverage is manufactured using a high temperature short time pasteurization process.
